# EUROPEAN PATENT SPECIFICATION

(11) **EP 4 341 571 B1**
(45) Date of publication and mention of the grant of the patent: **23.07.2025**
(21) Application number: 22734351.4
(22) Date of filing: 20.05.2022
(51) Int. Cl.: F16D 59/02, F04C 15/00

(54) **HYDRAULIC DRIVE DEVICE COMPRISING A GEROTOR TYPE MOTOR WITH A FRICTION BRAKE**
HYDRAULISCHE ANTRIEBSVORRICHTUNG MIT EINEM GEROTOR-MOTOR MIT EINER REIBUNGSBREMSE
DISPOSITIF D'ENTRAÎNEMENT HYDRAULIQUE COMPRENANT UN MOTEUR DE TYPE GEROTOR AVEC FREIN À FRICTION

(30) Priority: 21.05.2021 IN 202111022705
(43) Date of publication of application: 27.03.2024
(73) Proprietor: Danfoss A/S, 6430 Nordborg (DK)
(72) Inventor: KADAM, Hemant Rajaram, Pune 411028 (IN); OBU, Tatsuya, Kameoka City, Kyoto (JP); THAKUR, Hrishikesh Narayan, Pune, Maharashtra 411014 (IN); DESHPANDE, Kalyani Rajendra, Kothrud, Pune (IN); KHAN, Salman, Pune, Maharashtra 411028 (IN); PATIL, Sagar Chandrakant, Kolhapur, Maharashtra 416004 (IN); MATKAR, Nitin Sudam, Pune, Maharashtra 411028 (IN)
(74) Representative: Keil & Schaafhausen Patentanwälte PartGmbB
(86) International application number: PCT/IB2022/054741
(87) International publication number: WO 2022/243968

(56) References cited:
- EP-A1- 0 870 922
- US-A1- 2010 166 590

## Description

### Background

In many vehicle applications for low-speed, high-torque gerotor motors, it is desirable for the motor to have some sort of parking brake or parking lock, which is intended to be engaged only after the vehicle is stopped. Such parking brake devices are not intended to be dynamic brakes, which would be engaged while the vehicle is moving to bring the vehicle to a stop. In some cases, the parking brake can be incorporated on the motor output shaft external of the motor. In other cases, the parking brake can be incorporated into the motor. For example, a motor may have a pin break, wherein a pin is inserted into a star at a predetermined braking point (e.g., between adjacent splines or teeth of the star). However, such a brake can only be applied when the pin aligns with one of the predetermined braking points, which can lead to improper positioning of a vehicle driven by the motor. Additionally, such a braking system can lead to difficulty releasing the pin brake on a steep slope, and shock can occur when the pin brake is released.

A rotary fluid pressure device and a parking locking assembly therefor are known from US 2010/166590 A1. EP 0 870 922 A1 discloses a gerotor motor dynamic brake.

### Summary

The object underlying the invention is to provide a hydraulic drive device with improved braking.

This object is solved by a hydraulic drive device with mechanical braking having the features according to claim 1. The hydraulic drive device includes a spindle, a drive housing, and a gerotor hydraulic motor arrangement including an outer motor ring coupled to the drive housing such that the outer motor ring and the drive housing are adapted to rotate in unison about the central axis. The hydraulic drive device also includes a brake arrangement to brake (e.g., stop movement) the gerotor hydraulic motor arrangement and a brake release arrangement to selectively release the brake arrangement (e.g., to enable movement of the gerotor hydraulic motor arrangement).

The spindle has a first mounting flange. The spindle defines a central axis. The drive housing is mounted on the spindle. The drive housing includes a second mounting flange. Bearings allow the drive housing to rotate relative to the spindle about the central axis. A central shaft is configured to prevent the gerotor star from rotating about the star axis relative to the spindle while allowing the gerotor star to orbit about the central axis.

The outer motor ring includes radially inwardly facing pockets spaced circumferentially about the central axis. The gerotor hydraulic motor arrangement also includes a gerotor star including a plurality of lobes positioned circumferentially about a star axis defined by the gerotor star. The gerotor star is positioned within the outer motor ring with the star axis offset from the central axis such that the gerotor star is eccentric with respect to the outer motor ring. The gerotor star is mounted to orbit about the central axis to bring the lobes in and out of the pockets of the outer motor ring as the outer motor ring is hydraulicly driven about the central axis. One orbit of the gerotor star about the central axis corresponds to the outer motor ring moving one pocket position about the central axis relative to the gerotor star.

The brake arrangement includes a brake hub including a first portion concentric with the central axis and a second portion that is concentric with the gerotor star. The second portion of the brake hub mechanically interfaces with the gerotor star such that orbital movement of the gerotor star about the central axis drives rotation of the brake hub about the central axis. The brake hub rotates one time about the central axis each time the gerotor star orbits about the central axis. A first brake pad is mounted to rotate in unison with the brake hub about the central axis; a second brake pad is mounted to rotate in unison with the drive housing and the outer motor ring about the central axis. A brake piston is configured to press the first and second brake pads axially together to provide braking of the gerotor hydraulic motor arrangement. The brake piston is spring biased axially toward the first and second brake pads by a brake spring.

The brake release arrangement includes a brake release that extends through the central shaft and the brake hub. The brake release is adapted for releasing the braking of the gerotor hydraulic motor arrangement by pushing the brake piston axially away from the first and second brake pads against the spring bias of the brake spring.

Some aspects of the invention are directed to fitting the mechanical friction brake on the hydraulic drive device. This friction brake may serve as a parking brake on a gerotor motor in a low-speed, high-torque application, such as for driving large machinery, vehicles, or construction equipment. When an equipment operator engages the equipment to travel, the hydraulic fluid which drives the motor may be used to release the friction brake in the motor. When the equipment operator indicates the equipment should be still, the change in pressure of hydraulic fluid engages the friction brake in the motor.

The friction brake may be engaged and subsequently released at any point in a revolution of the motor, allowing for proper positioning of the vehicle or equipment even when on a steep slope. Removing the necessity of aligning a pin with an opening (e.g., between adjacent splines or teeth) may prevent shock when the friction brake is released, allow for the brake to be released when the vehicle or equipment is on a slope, and increase safety of vehicle startup.

The friction brake includes first and second friction brake pads spinning at different speeds. The brake is applied by pressing the first and second brake pads together to inhibit relative movement between them. The brake is applied via a spring force and is removed by the motor's operating pressure. Accordingly, the brake is applied when the hydraulic drive device is not being actuated by a user and is released when a user actuates the hydraulic drive device.

The first friction brake pads are mounted to the brake hub that spins relative to the gerotor hydraulic motor arrangement of the hydraulic drive device. The second friction brake pads can be mounted to a brake cover, which rotates with the outer (motor) ring of the gerotor hydraulic motor arrangement. The brake hub is configured to rotate faster than the outer ring so that the first brake pads rotate relative to the second brake pads. Accordingly, pressing the first and second brake pads together stops the relative motion between the brake hub and the outer ring.

The friction brake system may include a thrust plate, which can limit the range of movement of the piston driving the brake release and can reduce axial loading on the brake release. Shims in between parts of the friction brake system can help the friction brake work properly by accounting for variations in part dimensions due to manufacturing tolerances. In some examples, a split brake release rod can reduce mechanical wear. Phosphating on certain pieces can help to eliminate an additional bush in the motor assembly.

### Brief Description of the Drawings

The accompanying drawings, which are incorporated in and constitute a part of the description, illustrate several aspects of the present invention; A brief description of the drawings is as follows:
FIG. 1 is an isometric view of a hydraulic drive device configured in accordance with the principles of the present invention;
FIG. 2 is an axial cross section of a first example implementation of the hydraulic drive device of FIG. 1;
FIG. 3 is a perspective view of the hydraulic drive device of FIG. 1 with certain components of a brake arrangement and a brake release arrangement thereof exploded outwardly;
FIG. 4 is an elevational view of the hydraulic drive device of FIG. 1 with portions of a brake arrangement removed for ease in viewing an outer motor ring, a gerotor star, and a brake hub configured in accordance with the principles of the present invention;
FIG. 5 is an enlarged view of a portion of FIG. 2;
FIG. 6 is an exploded view of the first and second brake pads shown in FIG. 3;
FIG. 7 is a perspective view of a first example brake hub configured in accordance with the principles of the present invention;
FIG. 8 is a front elevational view of the brake hub of FIG. 7;
FIG. 9 is a rear elevational view of the brake hub of FIG. 7;
FIG. 10 is an enlarged view of another portion of FIG. 2;
FIG. 11 is a perspective view of a second example brake hub configured in accordance with the principles of the present invention and exploded outwardly from a gerotor star, the components of the second brake hub being exploded from each other;
FIG. 12 is a perspective view of a main body of the second example brake hub of FIG. 11;
FIG. 13 is a side elevational view of the main body of the second example brake hub of FIG. 11;
FIG. 14 is a front elevational view of the main body of the second example brake hub of FIG. 11;
FIG. 15 is a rear elevational view of the main body of the second example brake hub of FIG. 11;
FIG. 16 illustrates the second example brake hub and gerotor star of FIG. 11 interfacing with an outer motor ring of a gerotor hydraulic drive device;
FIG. 17 is a perspective view of a cross-section of the second example brake hub of FIG. 11;
FIG. 18 is an enlarged view of a portion of FIG. 17;
FIG. 19 is an axial cross section of a second example implementation of the hydraulic drive device of FIG. 1 including the second example brake hub of FIG. 11;
FIG. 20 shows the brake actuation piston and brake release of FIG. 19 disposed in the actuated and brake releasing positions to release the brake pads;
FIG. 21 is an enlarged view of a portion of FIG. 20;
FIG. 22 is an enlarged view of another portion of FIG. 20;
FIG. 23 shows the hydraulic drive device of FIG. 19 with bushes and washers disposed between the brake hub and the surrounding components;
FIG. 24 is a perspective view of a third example brake arrangement configured in accordance with the principles of the present invention, the components of the third brake hub being exploded from each other;
FIG. 25 is a rear perspective view of a brake hub of the third brake arrangement of FIG. 24; and
FIG. 26 is an axial cross section of a second example implementation of the hydraulic drive device of FIG. 1 including the third example brake arrangement of FIG. 24.

### Detailed Description

Reference will now be made in detail to example aspects of the present invention that are illustrated in the accompanying drawings. Wherever possible, the same reference numbers will be used throughout the drawings to refer to the same or like parts.

The present invention is directed to a mechanical friction brake on a hydraulic drive device, which may be used to propel large equipment, vehicles, or machinery. In certain implementations, the mechanical friction brake is integrated into the hydraulic drive device so as to be disposed within a footprint of the hydraulic drive device. In certain implementations, the mechanical friction brake can provide braking regardless of a position of a drive housing about a spindle. Hydraulic drive devices configured in accordance with the principles of the present disclosure also can be used to drive drill heads, driving wheels or discs, chipping/grinding drums, or other rotatable structures.

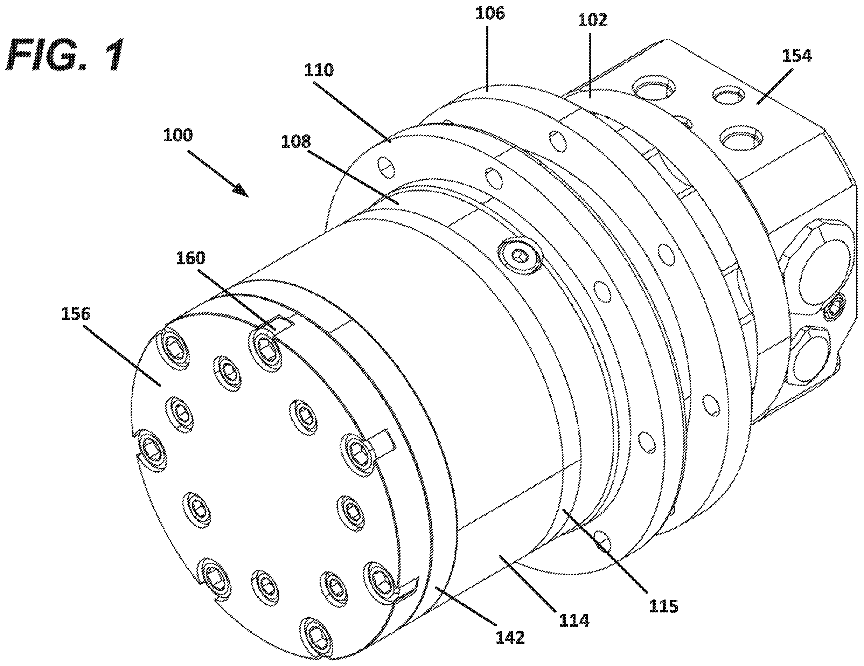

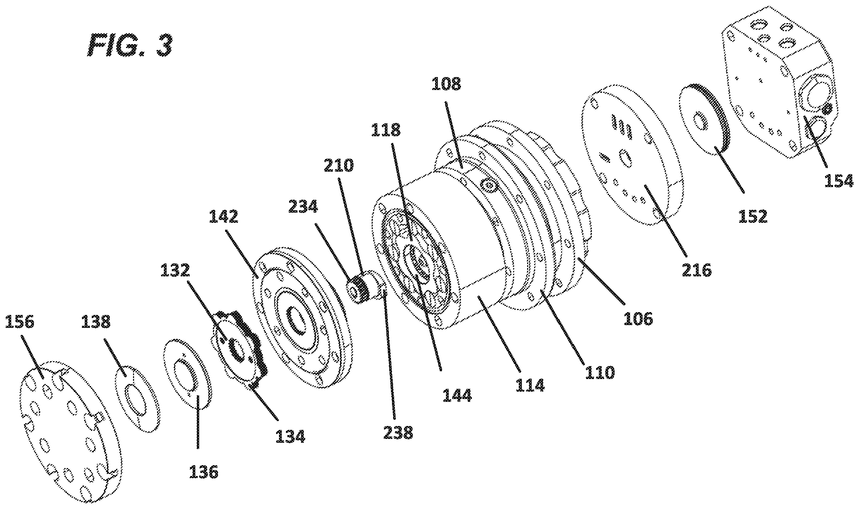

Referring to FIGS. 1-4, in some examples, the hydraulic drive device 100 includes a spindle 102 which defines a central axis 104 of the motor. The spindle 102 may have a first mounting flange 106 that can connect to a support housing or framework of the equipment, vehicle, or machinery. A drive housing 108 is mounted on the spindle 102 and configured to rotate relative to the spindle 102 about the central axis 104. The drive housing 108 may include a second mounting flange 110 that connects to a driven member such as a wheel, sprocket drum, or other rotatable structure. The hydraulic drive device 100 converts hydraulic fluid flow within the drive housing 108 into rotary movement of the drive housing 108 relative to the spindle 102. Torque from the hydraulic drive housing 108 is transferred to the driven member. In certain examples, the hydraulic drive device 100 may include bearings 112 for facilitating the drive housing 108 to rotate relative to the spindle 102 about the central axis 104.

In certain implementations, the hydraulic drive device 100 includes a gerotor hydraulic motor arrangement 113 including an outer motor ring 114 coupled to the drive housing 108 such that the outer motor ring 114 and the drive housing 108 are adapted to rotate in unison about the central axis 104. A motor cover 142 mounts to the outer motor ring 114 to rotate in unison with the outer motor ring 114. In certain implementations, a valve plate 115 is mounted between the drive housing 108 and the outer motor ring 114 to provide hydraulic fluid to the outer motor ring 114.

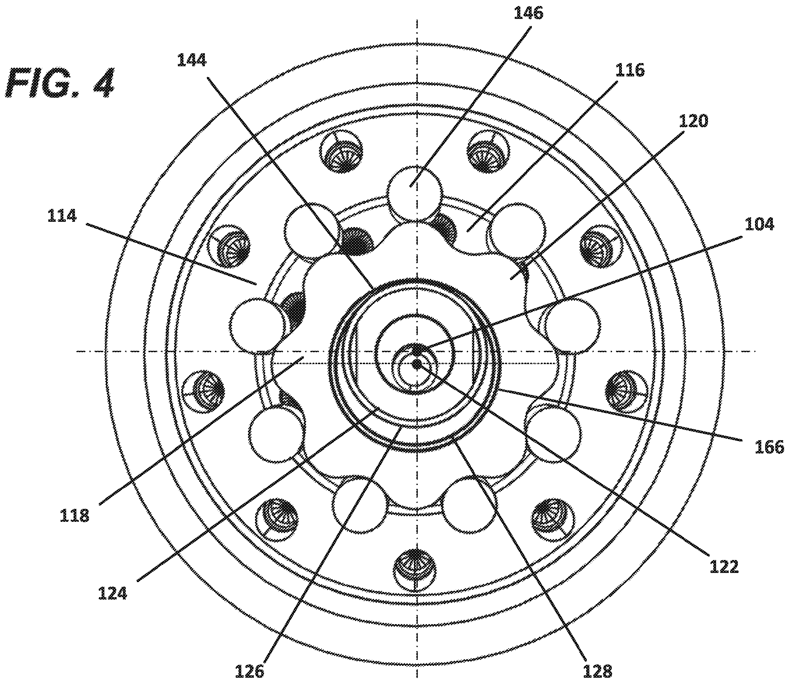

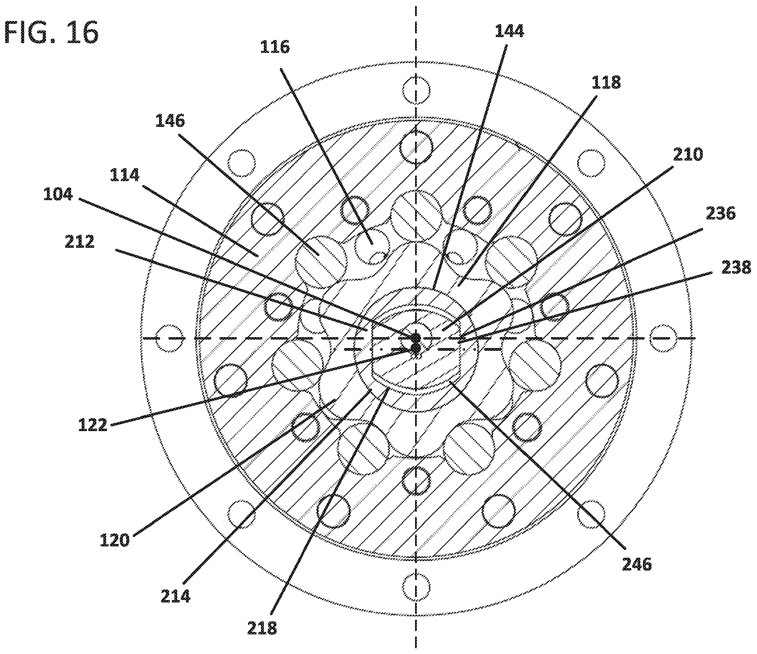

Referencing now FIG. 4, the outer motor ring 114 may include a plurality of radially inwardly facing pockets 116 spaced circumferentially about the central axis 104. In certain examples, the gerotor hydraulic motor arrangement 113 also may include a gerotor star 118 having a plurality of lobes 120 positioned circumferentially about a star axis 122 defined by the gerotor star 118. The gerotor star 118 is positioned within the outer motor ring 114 with the star axis 122 offset from the central axis 104 so that the gerotor star 118 is eccentric with respect to the outer motor ring 114. The gerotor star 118 may be mounted to orbit about the central axis 104 to bring the lobes 120 in and out of the pockets 116 of the outer motor ring 114 as the outer motor ring 114 is hydraulicly driven about the central axis 104. In certain examples, one orbit of the gerotor star 118 about the central axis 104 corresponds to the outer motor ring 114 moving one pocket position about the central axis 104 relative to the gerotor star 118. The number of lobes 120 on the gerotor star 118 is one less than the number of pockets 116. For example, if an outer motor ring 114 has seven pockets 116 and the associated gerotor star 118 will have six lobes 120. In certain examples, the pockets 116 may be separated by rollers 146 (e.g., see FIGS. 4 and 16). For example, the gerotor hydraulic motor arrangement 113 may be a Geroler^{®} gerotor motor, which is offered by Eaton Corporation. In some examples, the number of pockets 116 equals the number of rollers 146.

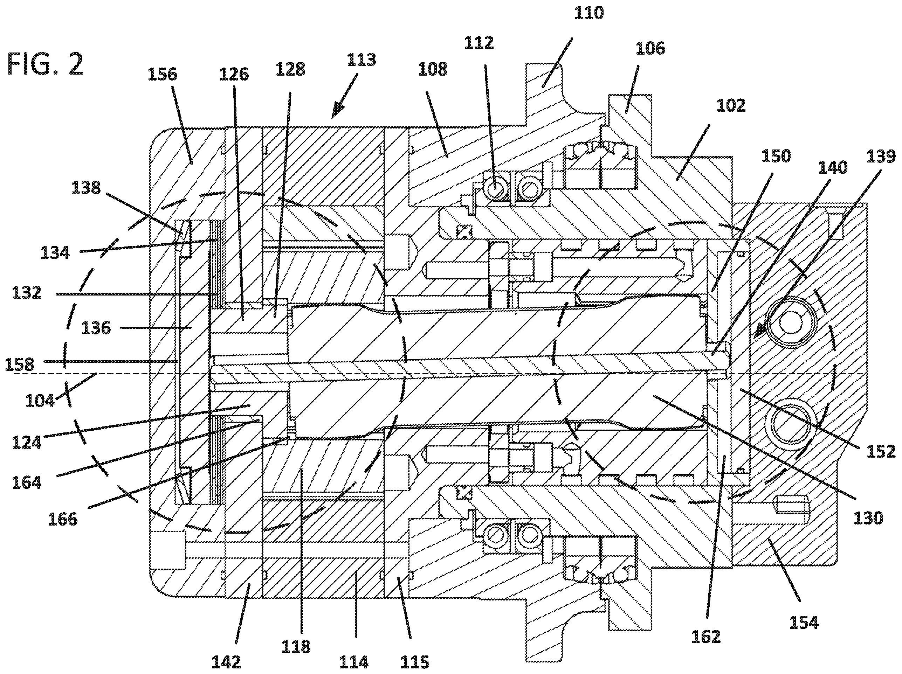

Referring back to FIG. 2, a central shaft 130 extends between the gerotor star 118 and the spindle 102. A first end of the central shaft 130 is splined or otherwise mechanically interfaced with the spindle 102. A second end of the central shaft 130 is splined or otherwise mechanically interfaced with the gerotor star 118. The engagement between the first end of the central shaft 130 and the spindle 102 inhibits rotation of the central shaft 130, which inhibits rotation of the gerotor star 118 relative to the spindle 102. Rather, the second end of the central shaft 130 moves along the orbit of the gerotor star 118 relative to the first end. Additional details about the functioning of the gerotor hydraulic motor arrangement 113 can be found in U.S. Patent Nos. 6,132,194 and 8,157 552.

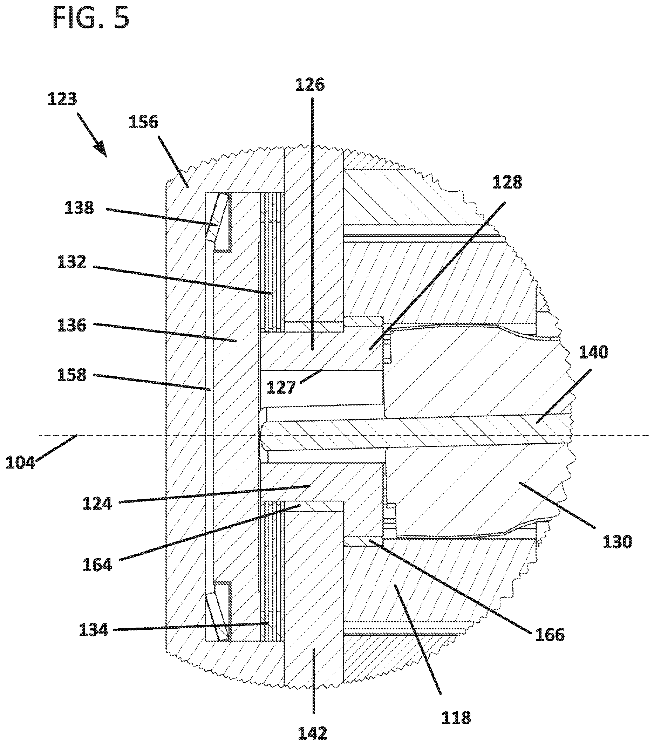

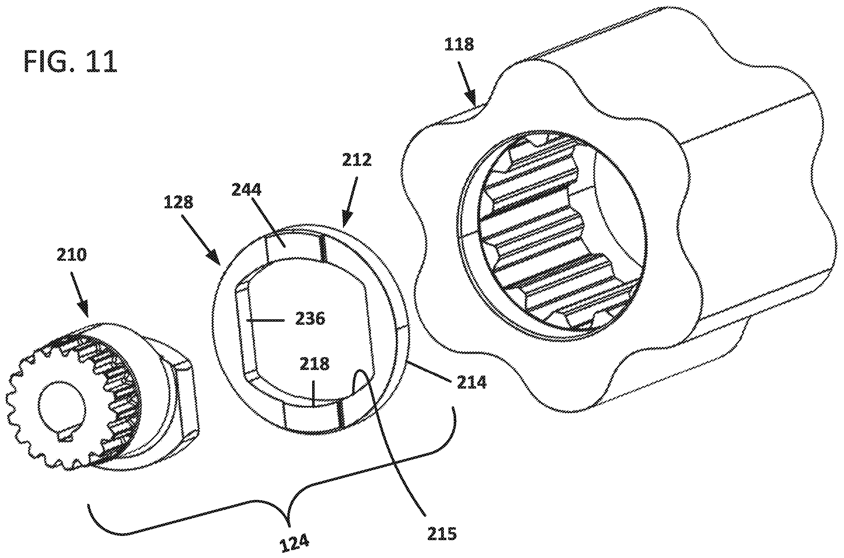

Referring now to FIGS. 5-9, the hydraulic drive device 100 includes a brake arrangement 123, 209 configured to stop rotation of the drive housing 108 relative to the spindle 102. In certain implementations, the brake arrangement 123, 209 functions as a parking brake to inhibit rotation of the drive housing 108 when hydraulic fluid is not being supplied or is drained from the gerotor hydraulic motor arrangement 113. The brake arrangement 123, 209 is released when hydraulic fluid is supplied to the gerotor hydraulic motor arrangement 113. A first example brake arrangement 123 is shown in FIGS. 2-10 and a second example brake arrangement 209 is shown in FIGS. 11-22.

In certain implementations, the brake arrangement 123, 209 is integrated within a footprint of the hydraulic drive device 100. In certain examples, the brake arrangement 123, 209 is disposed within the drive housing 108. In certain examples, a brake cover 156 can be mounted outside the motor cover 142 (e.g., see FIG. 1). In such examples, the brake cover 156 rotates in unison with the motor cover 142, the outer motor ring 114, and the drive housing 108. In certain examples, a brake chamber 158 is defined between the motor cover 142 and the brake cover 156 (e.g., see FIG. 5).

In certain implementations, the brake arrangement 123, 209 includes first and second brake pads 132, 134 disposed within the brake chamber 158 (e.g., see FIG. 5). In certain examples, the first and second brake pads 132, 134 are mounted concentric with the central axis 104 of the hydraulic drive device 100. The first brake pads 132 rotate relative to the second brake pads 134 when the brake pads 132, 134 are axially spaced from each other (e.g. along the central axis 104). When axially pressed together, friction causes the first brake pads 132 to slow and then stop movement relative to the second brake pads 134. In some examples, the first and second brake pads 132 are single friction brake pads. In other examples, the first and/or second brake pad 132 forms part of a set of multiple friction brake pads. In certain examples, the sets of first and second brake pads 132, 134 are interleaved (e.g., see FIG. 5).

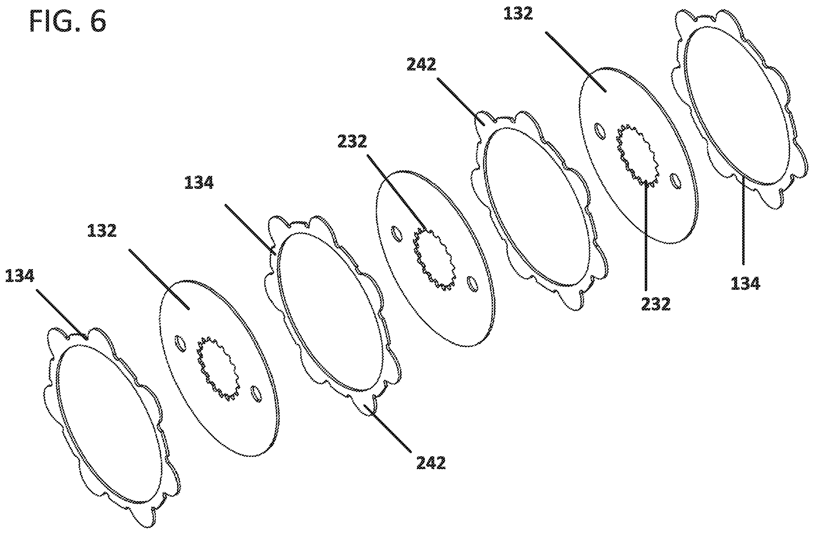

The second brake pads 134 are carried by the brake cover 156, which is mounted to the motor cover 142 (e.g., by axial bolts 160) to rotate in unison with the motor cover 142. Accordingly, the second brake pads 134 rotate in unison with the drive housing 108 and the outer motor ring 114. In certain implementations, the second brake pads 134 include petals 242 (e.g., see FIG. 6) or other protrusions that mate with recesses defined by the brake cover 156 to secure the second brake pads 134 to the brake cover 156. Other mounting configurations are possible.

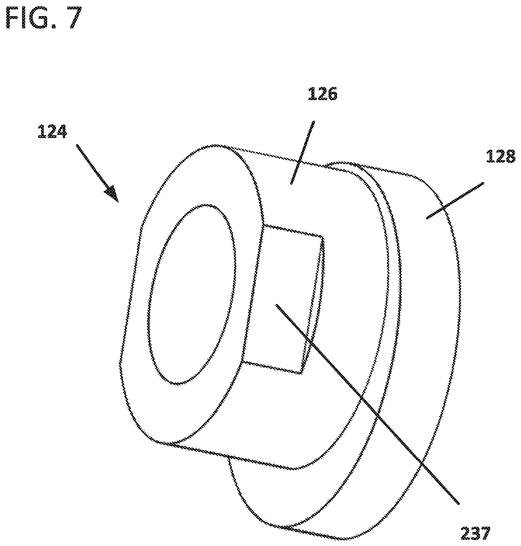

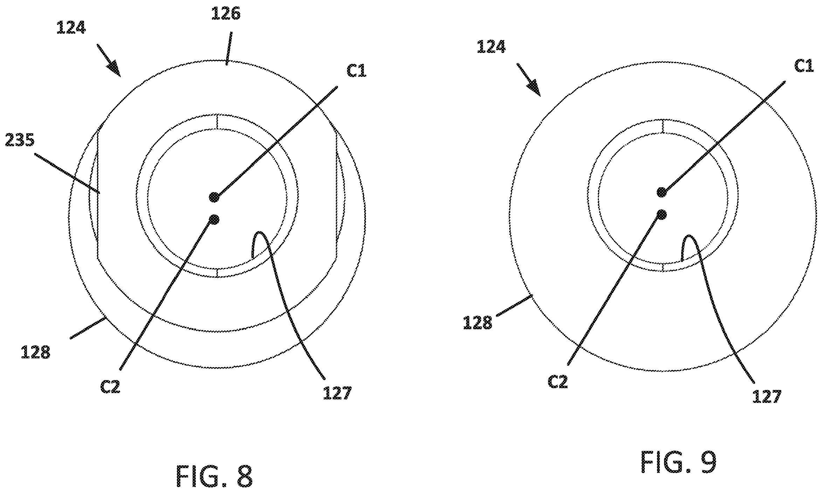

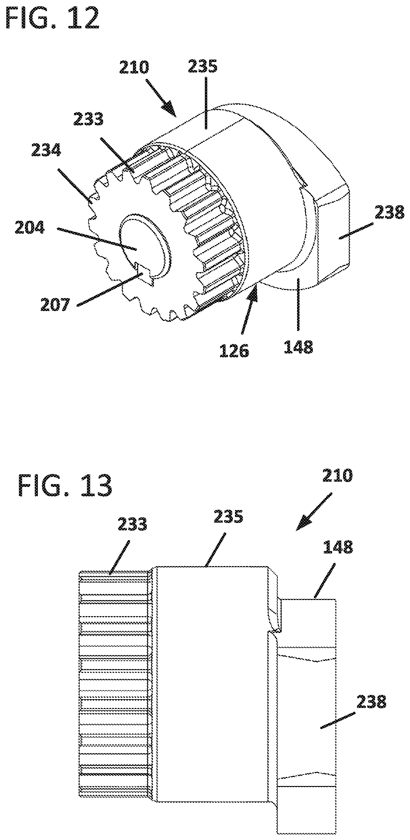

The first brake pads 132 are mounted to a brake hub 124, which is configured to rotate relative to the motor cover 142. Accordingly, the first brake pads 132 are carried by the brake hub 124 to rotate relative to the brake cover 156 and the second brake pads 134. In some examples, an inner circumference of the first brake pad 132 defines one or more flat surfaces that engage flat surfaces 237 on the brake hub 124 (e.g., see FIGS. 7 and 8). In other examples, the first brake pad 132 includes teeth 232 (e.g., see FIG. 6) that align with splines 234 on the brake hub 124 (e.g., see FIG. 12). Other mounting configurations are possible. The engagement between the first brake pad 132 and the brake hub 124 enables the first brake pad 132 to rotate in unison with the brake hub 124.

Referring to FIGS. 5, 7, and 8, the brake hub 124 has a first portion 126 mounted to the motor cover 142. The first portion 126 is concentric with the central axis 104 so that the brake hub 124 rotates relative to the motor cover 142 about the central axis 104. The brake hub 124 has a second portion 128 that is concentric with the gerotor star 118 (e.g., see FIG. 4). As will be discussed in more detail herein, the second portion 128 mechanically interfaces with the gerotor star 118 so that orbital movement of the gerotor star 118 about the central axis 104 drives rotation of the brake hub 124 about the central axis 104. In certain implementations, the orbital movement of the gerotor star 118 drives the brake hub 124 to rotate faster than the outer motor ring 114. In certain examples, the brake hub 124 rotates one time about the central axis 104 each time the gerotor star 118 orbits about the central axis 104 (i.e., each time the outer motor ring 114 indexes one pocket position).

In certain examples, the number of rotations of the brake hub 124 is equal to the number of pockets 116 defined by the gerotor hydraulic motor arrangement 113. For example, if there are seven pockets 116, the brake hub 124 will rotate seven times for each rotation of the outer motor ring 114. This conversion of the orbital motion of the gerotor star 118 to the rotary motion of the outer motor ring 114 and the rotary motion of the brake hub 124 allows for the brake arrangement 123, 209 to be designed for less torque. For example, in a system where the brake hub 124 will rotate seven times for each rotation of the outer motor ring 114, the brake arrangement 123, 209 may be designed for about seven times less torque. In some examples, this may lead to the brake arrangement 123, 209 being less expensive and using less material.

In certain implementations, a brake hub bush 164 is positioned between the brake hub 124 and the motor cover 142. In certain examples, the brake hub bush 164 helps to maintain the brake hub 124 in its proper position for reliable motor performance. In some examples, a star bush 166 is positioned at a central opening 144 of gerotor star 118. In other examples, the outer surface of the second portion 128 of the brake hub 124 is phosphate treated for protection against mechanical wear and tear.

In certain implementations, the brake arrangement 123, 209 includes a brake piston 136 configured to selectively press the first brake pad 132 and second brake pad 134 axially (e.g., along the central axis 104) together to provide braking of the gerotor hydraulic motor arrangement 113 (e.g., see FIG. 5). The brake piston 136 may be spring biased axially toward the first brake pad 132 and second brake pad 134 by a brake spring 138. Accordingly, the brake piston 136 actuates the brake arrangement 123, 209 absent a releasing force to overcome the bias of the brake spring 138. In certain examples, the brake piston 136 and the brake spring 138 are disposed in the brake chamber 158. In the example shown, the brake spring 138 is a disc spring. Other types of springs (e.g., coil springs) also could be used.

Axially pressing together the first and second brake pads 132, 134 stops the relative movement between the brake hub 124 and the outer motor ring 114. Because rotation of the brake hub 124 is tied to orbital movement of the gerotor star 118, stopping the relative movement between the brake hub 124 and the outer motor ring 114 also stops the relative movement between the gerotor star 118 and the outer motor ring 114. Stopping this orbital movement of the star 118 stops the rotation of the outer motor ring 114. Because the brake hub 124 and star 118 are always engaged (instead of engaging at indexed positions along a gear), the braking force can be applied at any desired time.

In certain implementations, a hydraulic drive device 100 includes a brake release arrangement 139, 201 configured to selectively release the brake arrangement 123, 209. The brake release arrangement 139, 201 applies sufficient force to the brake piston 136 to overcome the bias of the brake spring 138 and moves the brake piston 136 away from the first and second brake pads 132, 134, thereby allowing axial separation of the first and second brake pads 132,1 34. In certain examples, the brake release arrangement 139, 201 is actuated automatically when hydraulic fluid is applied to the gerotor hydraulic motor arrangement 113 as will be described in more detail herein. A first example implementation of a brake release arrangement 139 is shown in FIGS. 2-10 and a second example implementation of a brake release arrangement 201 is shown in FIGS. 11-22.

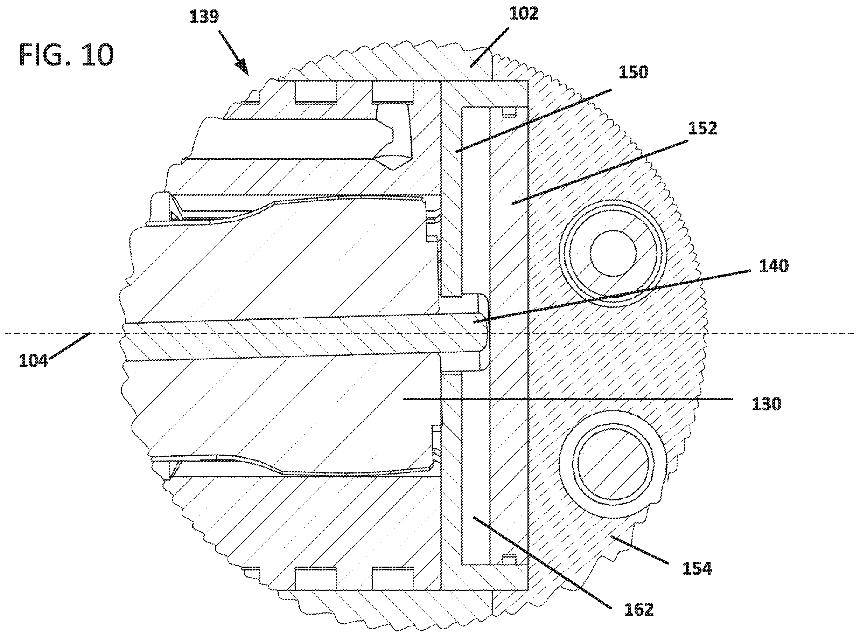

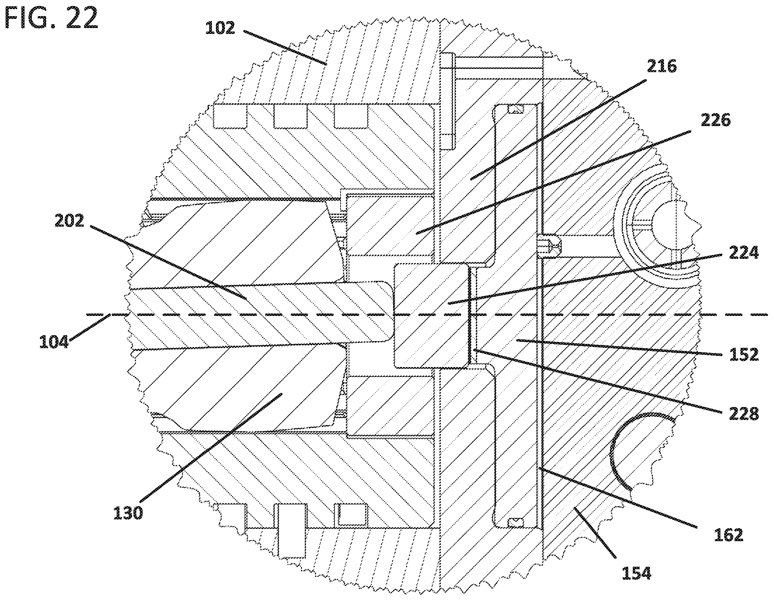

In certain implementations, the brake release arrangement 139, 201 is integrated within a footprint of the hydraulic drive device 100. In certain examples, a portion of the brake release arrangement 139, 201 is disposed within a release chamber 162 formed between an end cover 154 and a thrust plate 150, 216, which is mounted to the spindle 102 (e.g., see FIGS. 10 and 22). In such examples, the end cover 154 remains stationary relative to the spindle 102. The end cover 154 defines hydraulic inlet and outlets ports for hydraulic lines extending through the hydraulic drive device 100 to the gerotor hydraulic motor arrangement 113.

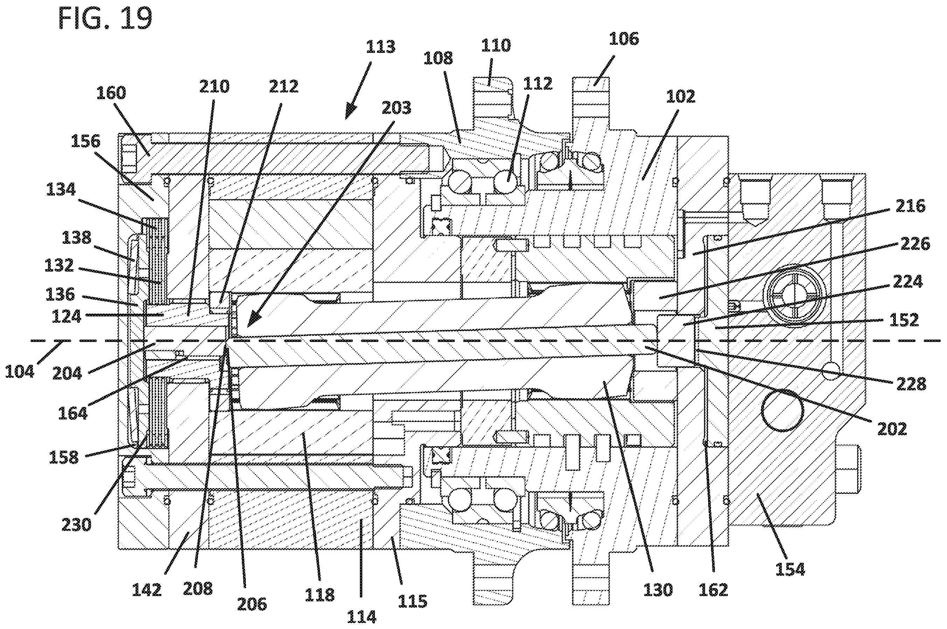

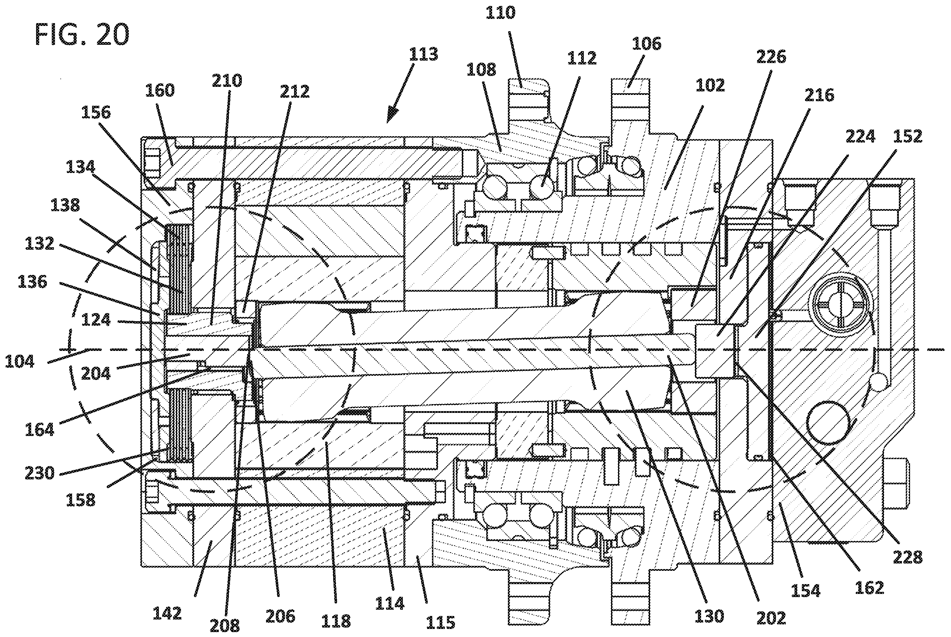

The brake release arrangement 139, 201 includes a brake release 140, 203 that extends through the central shaft 130 and through the brake hub 124 (e.g., see FIGS. 2 and 19). The brake release 140, 203 is configured to slide relative to the central shaft 130 and relative to the brake hub 124 between a braking position (e.g., see FIGS. 2 and 19) and a releasing position (e.g., see FIG. 20). The brake release 140, 203 is operationally coupled to the brake piston 136 so that when moved to the releasing position, the brake release 140, 203 releases the braking of the gerotor hydraulic motor arrangement 113 by pushing the brake piston 136 axially (e.g., along the central axis 104) away from the first brake pad 132 and second brake pad 134 against the spring bias of the brake spring 138. When the brake release 140, 203 is disposed in the braking position, however, the brake release 140, 203 allows the brake spring 138 to bias together the first and second brake pads 132, 134 via the brake piston 136.

Referring now to FIGS. 10 and 22, the brake release 140, 203 is hydraulically actuated. The brake release 140, 203 is operationally coupled to a brake actuation piston 152 disposed at the spindle side of the hydraulic device 100. The brake actuation piston 152 is configured to be hydraulically actuated to move along the central axis 104 towards and away from the gerotor hydraulic motor arrangement 113 between a starting position and an actuated position. Moving the brake actuation piston 152 from the starting position to the actuated position moves the brake release 140, 203 from the braking position to the releasing position.

In certain examples, as shown in FIGS. 2 and 19, when an operator selects a neutral or park function, motor inlet hydraulic oil may decrease (in some examples close to zero pressure) and there will be no force against the brake actuation piston 152. The spring force of the brake spring 138 will then be able to exert a force against the brake release 140, 203 as well as against the first brake pad 132 and second brake pad 134. The friction generated between the first brake pad 132 and second brake pad 134 may slow or prevent rotation of the brake hub 124 relative to the brake cover 156 (and therefore of the outer motor ring 114, motor cover 142, and drive housing 108, which are connected to the brake cover 156), thus engaging the brake.

In certain examples, as shown in FIG. 20, when an operator selects a travel or drive function, motor inlet hydraulic oil may pressurize the brake actuation piston 152 to move from the starting position to the actuation position. This axial force transfers through the brake release 140, 203 to the brake piston 136 to compress the brake spring 138, thereby relieving pressure of the brake piston 136 on the first brake pad 132 and second brake pad 134, thus releasing the brake. In certain examples, the axial force also may transfer through a spacer 224 and shimming 228 prior to being transferred to the brake release 140, 203 as will be discussed in more detail with respect to FIGS. 19-22.

In certain implementations, pressure of the inlet hydraulic oil pressure exerted on the brake actuation piston 152 may exceed the force necessary to counter the bias of the brake spring 138. In certain examples, the inlet hydraulic oil pressure may be sufficiently high to bottom out the brake spring 138, which can lead to deformation of the brake spring 138 or otherwise damage parts of the brake
arrangement 123, 209 or brake release arrangement 139, 201. To mitigate the forces applied to these components, certain implementations of the brake release arrangement 139, 201 includes a thrust plate 150, 216 to limit the axial range of movement of the brake actuation piston 152, which limits how far the brake actuation piston 152 can push the brake release 140, 203. The thrust plate 150, 216 opposes the brake actuation piston 152 and may be bolted between the spindle 102 and an end cover 154. In the examples shown in FIGS. 10 and 22, the brake actuation piston 152 is mounted within a pocket of the thrust plate 150, 216. The thrust plate 150, 216 is positioned to engage the brake actuation piston 152 when the brake actuation piston 152 is moved to the actuated position, which corresponds to the releasing position of the brake release 140, 203. Accordingly, the brake actuation piston 152 cannot push the brake release 140, 203 beyond the releasing position. In this manner, the thrust plate 150, 216 may help to transfer this high axial thrust load to the spindle 102 and maintain low axial thrust load in the brake release 140, 203 and brake piston 136. In some examples, this mitigation of applied forces can increase the working life and reliability of the brake arrangement 123, 209 and brake release arrangement 139, 201 and decrease the likelihood of damage to the affected parts. Further, the stroke of the brake actuation piston 152 may be limited to less than the range of motion of the brake spring 138, which may enable the friction brake system to be designed with only a single brake spring 138. In other examples, however, multiple brake springs 138 can be used.

Referring now to FIGS. 7-9, a first example implementation of a brake arrangement 123 includes a single-piece brake hub 124. As shown in FIG. 8, the first portion 126 of the brake hub 124 is substantially circular to facilitate rotational mounting to the motor cover 142. The second portion 128 of the brake hub 124 also is substantially circular, but is larger than the first portion 126. The brake hub 124 defines a passage 127 through which the brake release 140 extends. In certain examples, the passage 127 is centered with respect to the first portion 126 of the brake hub 124 about a longitudinal axis C1. Because the first portion 126 mounts at the motor cover 142, the brake hub 124 rotates about the longitudinal axis C1, which extends coaxial to the central axis 104.

The second portion 128 of the brake hub 124 has a longitudinal axis C2, which is offset from the longitudinal axis C1. The second portion 128 is sized to concentrically mount within a central opening 144 of the gerotor star 118. In certain examples, the longitudinal axis C2 aligns with a central longitudinal axis 122 of the gerotor star 118. As the gerotor star 118 orbits, the gerotor star 118 entrains the second portion 128 of the brake hub 124, which functions as a crank arm to rotate the first portion 126. Accordingly, the brake hub 124 rotates one time per each orbit of the gerotor star 118.

As shown in FIGS. 2 and 10, a first example brake release arrangement 139 includes a single-piece brake release 140 that extends between the brake piston 136 and the brake actuation piston 152. In certain examples, the single-piece brake release 140 directly contacts both the brake piston 136 and the brake actuation piston 152. The brake release 140 extends through the passage 127 defined through the brake hub 124 to reach the brake piston 136. The brake release 140 also extends through the central shaft 130 to reach the brake actuation piston 152. Accordingly, hydraulically powered axial thrust applied to the brake actuation piston 152 is transferred to the brake release 140, which transfers the axial thrust to the brake piston 136 to compress the brake spring 138.

Referring now to FIGS. 11-18, a second example brake arrangement 209 includes a multi-piece brake hub 124 including a main body 210 and an outer collar 212. The outer collar 212 interfaces with the gerotor star 118 to orbit with the star about the star axis 122 (e.g., see FIG. 16). The interaction between the outer collar 212 and the main body 210 transforms the orbital movement of the star 118 and outer collar 212 into rotational movement of the main body 210 and collar 212. This rotational movement is imparted to the first brake pads 132 via the main body 210. This second example brake arrangement 209 is usable with either of the brake release arrangements 139, 201 disclosed herein.

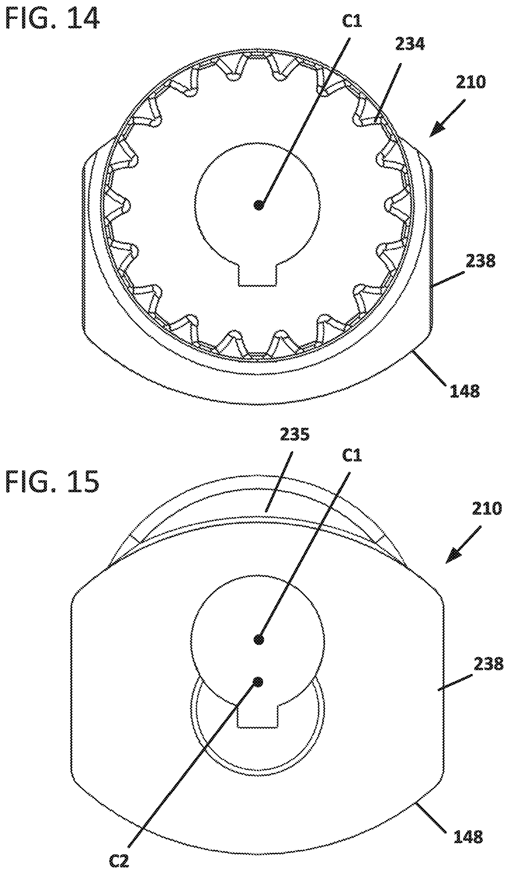

The main body 210 defines the first portion 126 of the brake hub 124. The main body 210 and outer collar 212 cooperate to define the second portion 128 of the brake hub 124. The main body 210 has a brake pad mounting section 233, a hub mounting section 235, and an inner part 148 (e.g., see FIG. 13). The hub mounting section 235 is configured to rotatably mount within an opening of the motor cover 142 (e.g., see FIG. 19). The brake pad mounting section 233 is configured to support and key with the first brake pads 132 so that the first brake pads 132 rotate in unison with the main body 210. For example, the brake pad mounting section 233 may include teeth or splines 234 (e.g., see FIGS. 12 and 14) that key with inwardly facing teeth 232 of the first brake pads 132 (e.g., see FIG. 6).

The inner part 148 of the main body 210 mates with the outer collar 212. The inner part 148 has an oblong shape (e.g., see FIG. 15) with oppositely facing flat edges 238. The inner part 148 is offset relative to the hub mounting section 235 (e.g., see FIG. 13) so that a longitudinal axis C2 of the inner part 148 is offset from a longitudinal axis C1 of the hub mounting section 235 (e.g., see FIG. 15). This offset allows the inner part 148 to act as a crank to rotate the hub mounting section 235 of the main body 210.

The outer collar 212 mounts on the inner part 148 of the brake hub 124 (e.g., see FIGS. 11 and 16). The outer collar 212 defines an aperture 215 that receives the inner part 148 of the main body 210. In certain examples, the aperture 215 is keyed to an outer surface of the inner part 148 so that the outer collar 212 is rotationally fixed relative to the inner part 148. In the example shown, an inner surface 218 of the outer collar 212 includes a collar flat edge 236 that mates with a hub flat edge 238 of the inner part 148 of the main body 210. Engagement between the collar flat edge 236 and the hub flat edge 238 causes the main body 210 to rotate in unison with the outer collar 212.

An outer surface 214 of the outer collar 212 is positioned concentric with the central opening 144 of the gerotor star 118 (e.g., see FIG. 12). In certain implementations, the outer surface 214 of the outer collar 212 is phosphate treated. The phosphate treatment may help to protect the outer surface 214 from frictional wear and tear, thereby eliminating the need for a star bush 166 at the central opening 144 of gerotor star 118. The star 118 imparts an orbital movement on the outer collar 212. Because the main body 210 is held by the motor cover 142 at the brake hub mounting section 235, the main body 210 cannot move orbitally with the outer collar 212. Instead, the orbital force applied by the star 118 to the outer collar 212 is transformed into rotational force of the outer collar 212 relative to the star 118. The engagement of the flat edges 236, 238 between the outer collar 212 and the main body 210 transfers the rotational movement of the outer collar 212 to the main body 210.

In some examples, the outer collar 212 includes a tab 244, which prevents the outer collar 212 from tilting and keeps the outer collar 212 in proper alignment for reliable motor performance. In certain implementations, the engagement of the outer collar 212 with the main body 210 creates a gap 246 between the outer collar 212 and the main body 210. In certain examples, the gap 246 is more prominent between the non-flat edges. The gap 246 may provide clearance to accommodate differences in the manufacturing tolerances of the brake hub 124.

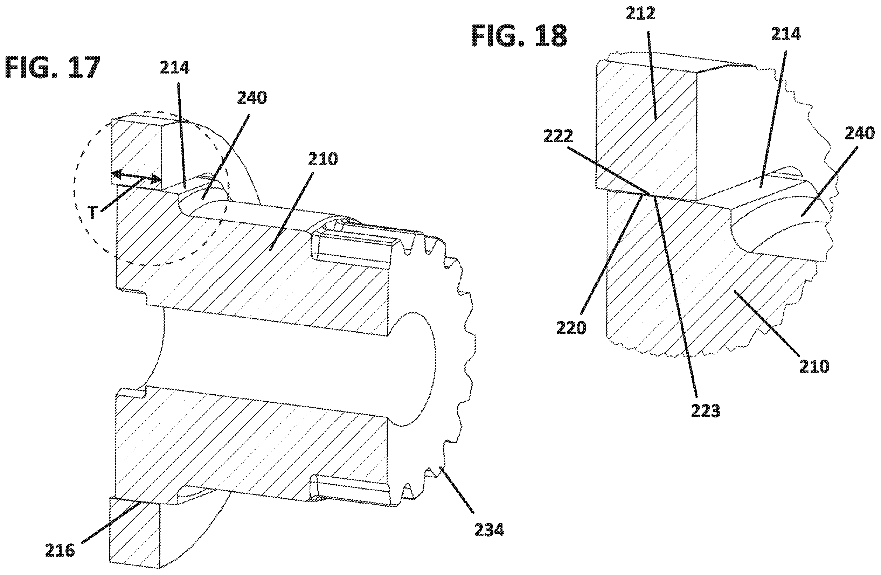

Referring now to FIGS. 17 and 18, in certain implementations, the outer surface 214 of the inner part 148 of the brake hub 124 and an inner surface 218 of the outer collar 212 oppose one another along an axial thickness T of the outer collar 212. In some implementations, the opposing portions of the outer surface 214 and the inner surface 218 are planar. In other implementations, the opposing portions have curvatures 220 and 222, respectively. In certain examples, the curvatures 220, 222 are configured to reduce edge loading between the collar 212 and the inner part 148, which may reduce stress at the fillet 240 between the inner part 148 and the hub mounting section 235. For example, the curvatures 220, 222 may have peaks offset from edges of the outer collar 212 so that the initial point of contact between the outer collar 212 and the inner part 148 is disposed at an intermediate location 223 along the axial thickness T. In certain examples, the inclusion of such curvatures 220 and 222 may help to distribute a torque load uniformly through the part interface, thereby avoiding edge loading and reducing high bending stresses in the fillet 240. The resulting reduction of high bending stresses may help to increase the fatigue life of the brake hub 124.

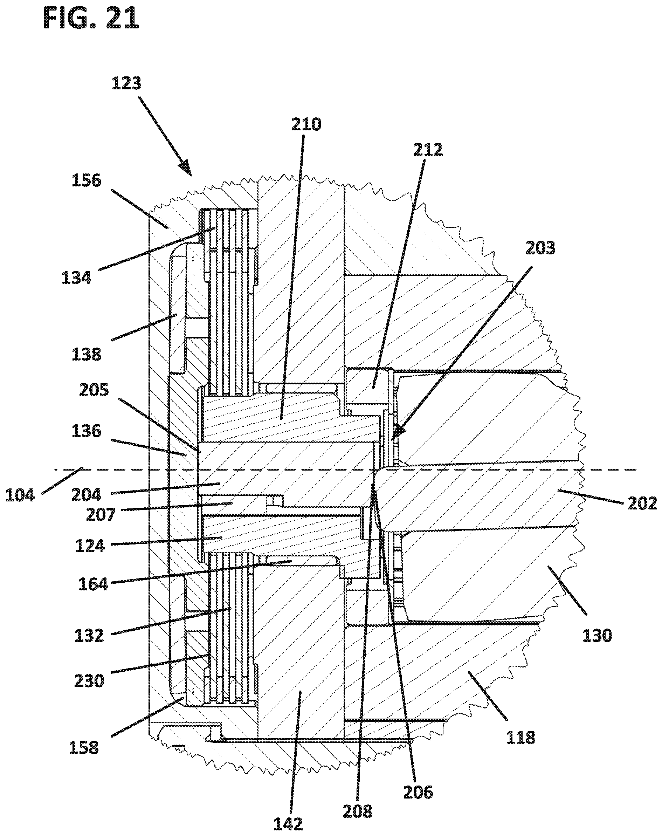

Referring now to FIG. 19-22, another example brake release arrangement 201 includes a multi-piece release member 203. This brake release arrangement 201 is usable with either of the brake arrangements 123, 209 disclosed herein. In certain implementations, the multi-piece release member 203 includes a first rod 202 that extends through the central shaft 130 and a separate second rod 204 that extends through the brake hub 124. Separating the brake release 203 into separate rods 202, 204 reduces wear on the brake piston 136 by allowing the first rod 202 to move with the orbital movement of the gerotor star 118 without imparting orbital movement to the second rod 204 . Accordingly, the second rod 204 does not slide over the surface of the brake piston 136. Further, the second rod 204 may contact the brake piston 136 via a generally flat end surface 205 (e.g., see FIG. 21) instead of the contoured or angled surface as shown in FIG. 5.

The first rod 202 is angled relative to the central axis 104 so that a first engagement end 206 of the first rod 202 can orbit with the star 118 while an opposite end of the first rod 202 remains stationary at the spindle 102. The first rod 202 does not rotate relative to the central shaft 130. In certain examples, the second rod 204 extends through the brake hub 124 coaxial or parallel with the central axis 104. In certain examples, the second rod 204 is configured to rotate with the brake hub 124. For example, a key 207 may engage a pocket defined in the brake hub 124 and a pocket defined in the second rod 204 so that the brake hub 124 and second rod 204 rotate in unison. Other keying configurations are possible.

In certain implementations, a first engagement end 206 of the first rod 202 engages a second engagement end 208 of the second rod 204 (e.g., see FIG. 21). In certain examples, as the drive housing 108 and brake hub 124 rotate, the first engagement end 206 and the second engagement end 208 contact each other in a rolling-type motion. This rolling-type motion may result in less mechanical wear to the first rod 202 and second rod 204. In certain examples, the first rod 202 is positioned at an angle relative to the central axis 104 and the second rod 204 may be positioned on the central axis 104 and so the first engagement end 206 will maintain edge contact with the second engagement end 208. Further, the second engagement end 208 rotates with the brake hub 124 while the first engagement end 206 orbits with the star 118. These relative movements reduce the pressure velocity ratio therebetween.

In certain implementations, the brake release 203 (e.g., the first rod 202) does not directly contact the brake actuation piston 152. Rather, a spacer 224 (e.g., a dowel pin) can separate the brake release 230 from the brake actuation piston 152. The spacer 224 performs a similar function to the second rod 204 in that the brake actuation piston 152 may engage a relative flat surface instead of the angled surface of the first rod 202. For similar reasons, a drive spacer 226 is provided between the central shaft 130 and the thrust plate 216.

In the example shown in FIG. 22, the spacer 224 extends through part of the thrust plate 216 to reach the brake actuation piston 152. In some examples, the spacer 224 directly contacts the brake actuation piston 152. In other examples, one or more shims 228 (e.g., metallic discs) are disposed between the spacer 224 and the brake actuation piston 152. The shims 228 may help to accommodate variations in the stroke length of the brake actuation piston 152 (which may be caused by variations in manufacturing tolerances of the parts of the motor). The shims 228 also may help control variation in the release stroke, which allows the user of a single brake spring 138.

In some examples, the motor parts which make up the brake arrangement 123, 209 and/or the brake release arrangement 139, 201 may be installed in a newly manufactured motor. In some examples, the motor parts which make up the brake arrangement 123, 209 and/or the brake release arrangement 139, 201may be installed in a refurbished motor or maybe placed into a motor which is undergoing maintenance. In other examples, the motor parts which make up the brake arrangement 123, 209 and/or the brake release arrangement 139, 201may be organized as a kit which can be used to retrofit a motor which originally had a different type of braking system.

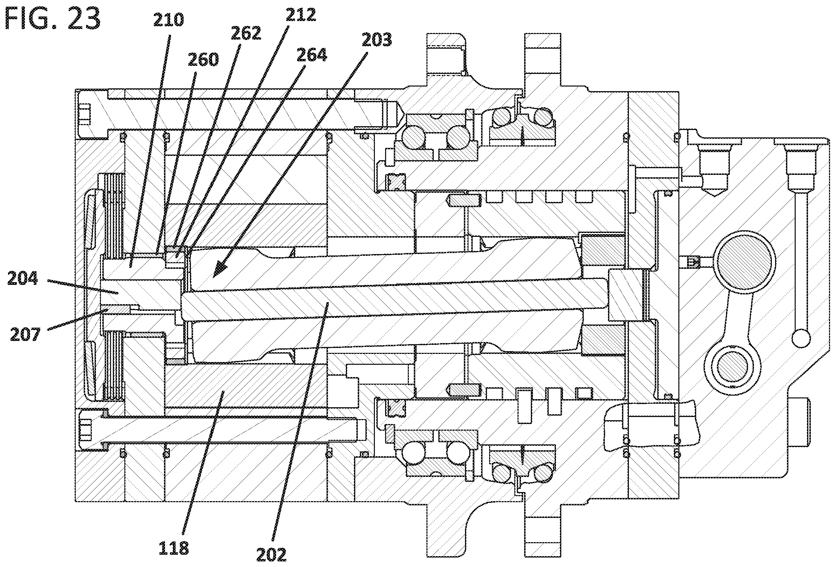

FIG. 23 shows the second example implementation of the hydraulic drive device of FIG. 19 including the second example brake hub 124 of FIG. 11 except that bushes 260, 262 are shown around the main body 210 and the outer collar 212, respectively. The bushes 260, 262 protect against friction between the brake hub 124, the motor cover 142, and the gerotor star 118. A washer 264 also may be disposed between the outer collar 212 and the central shaft 130 to protect against friction.

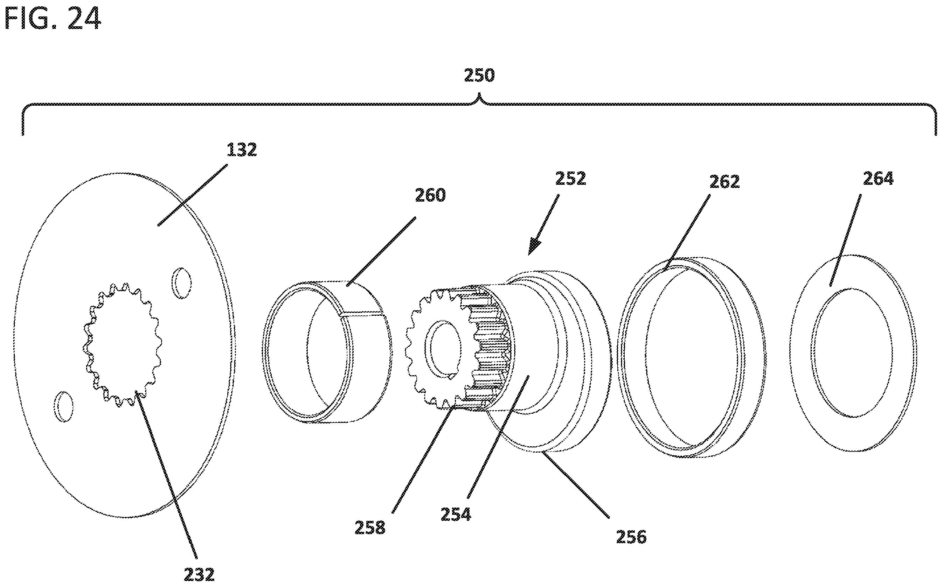

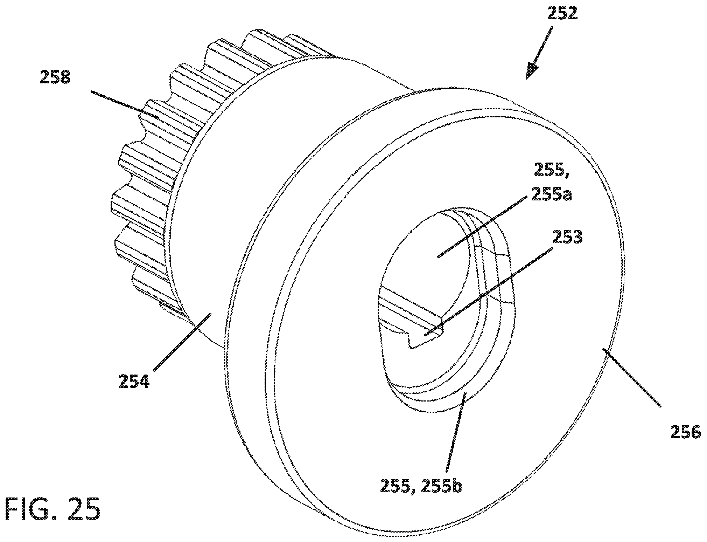

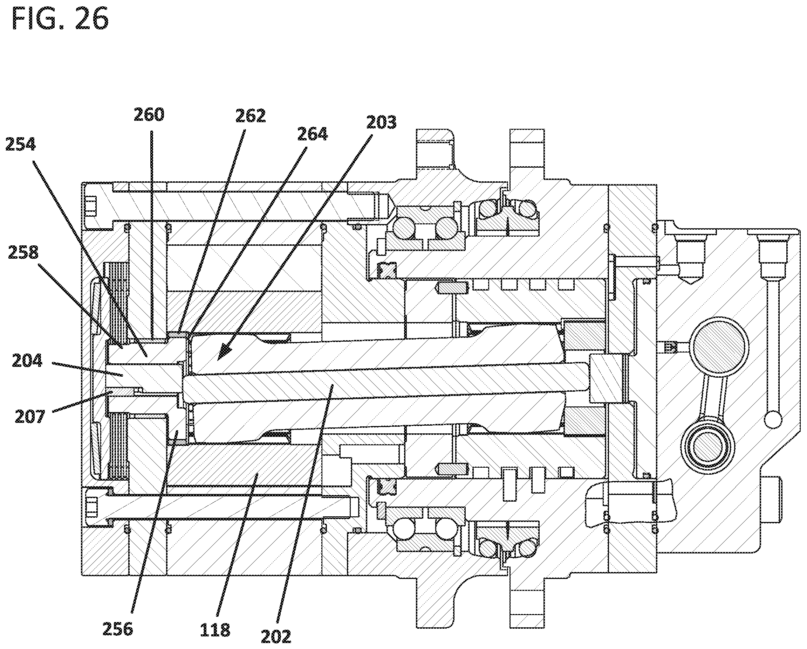

FIGS. 24-26 illustrate an alternative example brake arrangement 250 suitable for use with either of the brake release arrangements 139, 201 disclosed herein. The brake arrangement 250 combines features of the brake arrangements 123, 209. The example brake arrangement 250 includes a single-piece brake hub 252 that is substantially similar to the brake hub 124 of FIG. 7 except that a first portion 254 of the hub 252 defines the splined brake pad mounting section 258 of the hub 124 of FIG. 12. The splines 258 are configured to engage with inner teeth 232 of the first brake pads 132 so that the first brake pads 132 rotate with the brake hub 252.

A bush 258 is disposed over the main body 254 to directly interface with the motor cover 142. As with the brake hub 124, a second portion 256 of the brake hub 252 is larger and sized to fit with the gerotor star 118 to orbits with the gerotor star 118 about the star axis 122. Another bush 260 is disposed over the outer collar 256 to directly interface with the gerotor star 118. Finally, a washer 264 is disposed between the second portion 256 of the brake hub 250 and the central shaft 130.

Also as with the brake hub 124 of FIG. 7, the hub 252 defines a passage 255 centered with respect to the first portion 254 of the brake hub 252. While a first portion 255a of the passage 255 is generally cylindrical through the first portion 254 of the brake hub 252, a second portion 255b of the passage 255 defines an elliptical shape through the second portion 256 of the brake hub 252. The elliptical shape facilitates initial insertion of the second release rod 204 into the hub 252. In certain examples, the second portion of the passage through any of the brake hubs 124 disclosed herein may be elliptical. In certain implementations, a key 207 (FIG. 12) may engage a pocket 253 (FIG. 24) defined in the first portion 255a of the passage 255 and a pocket defined in the second release rod 204 so that the brake hub 252 and the second rod 204 rotate in unison.

Having described the preferred aspects and implementations of the present invention, modifications and equivalents of the disclosed concepts may readily occur to one skilled in the art. However, it is intended that such modifications and equivalents be included within the scope of the claims which are appended hereto.

## Claims

1. A hydraulic drive device (100) with mechanical braking, the hydraulic drive device (100) comprising:
a spindle (102) having a first mounting flange (106), the spindle (102) defining a central axis (104);
a drive housing (108) mounted on the spindle (102), the drive housing (108) including a second mounting flange (110);
bearings (112) for allowing the drive housing (108) to rotate relative to the spindle (102) about the central axis (104);
a gerotor hydraulic motor arrangement (113) including an outer motor ring (114) coupled to the drive housing (108) such that the outer motor ring (114) and the drive housing (108) are adapted to rotate in unison about the central axis (104), the outer motor ring (114) including a plurality of radially inwardly facing pockets (116) spaced circumferentially about the central axis (104), the gerotor hydraulic motor arrangement (113) also including a gerotor star (118) including a plurality of lobes (120) positioned circumferentially about a star axis (122) defined by the gerotor star (118), the gerotor star (118) being positioned within the outer motor ring (114) with the star axis (122) offset from the central axis (104) such that the gerotor star (118) is eccentric with respect to the outer motor ring (114), the gerotor star (118) being mounted to orbit about the central axis (104) to bring the lobes (120) in and out of the pockets (116) of the outer motor ring (114) as the outer motor ring (114) is hydraulicly driven about the central axis (104), wherein one orbit of the gerotor star (118) about the central axis (104) corresponds to the outer motor ring (114) moving one pocket position about the central axis (104) relative to the gerotor star (118);
a central shaft (130) configured to prevent the gerotor star (118) from rotating about the star axis (122) relative to the spindle (102) while allowing the gerotor star (118) to orbit about the central axis (104);
**characterized by** a brake hub (124, 252) including a first portion (126, 254) concentric with the central axis (104) and a second portion (128, 256) that is concentric with the gerotor star (118), the second portion (128, 256) of the brake hub (124, 252) mechanically interfacing with the gerotor star (118) such that orbital movement of the gerotor star (118) about the central axis (104) drives rotation of the brake hub (124, 252) about the central axis (104), wherein the brake hub (124, 252) rotates one time about the central axis (104) each time the gerotor star (118) orbits about the central axis (104);
a first brake pad (132) mounted to rotate in unison with the brake hub (124, 252) about the central axis (104);
a second brake pad (134) mounted to rotate in unison with the drive housing (108) and the outer motor ring (114) about the central axis (104);
a brake piston (136) for pressing the first and second brake pads (132, 134) axially together to provide braking of the gerotor hydraulic motor arrangement (113), the brake piston (136) being spring biased axially toward the first and second brake pads (132, 134) by a brake spring (138); and
a brake release (140, 203) that extends through the central shaft (130) and the brake hub (124, 252), the brake release (140, 203) being adapted for releasing the braking of the gerotor hydraulic motor arrangement (113) by pushing the brake piston (136) axially away from the first and second brake pads (132, 134) against the spring bias of the brake spring (138).

2. The hydraulic drive device (100) of claim 1, wherein the second portion (128, 256) of the brake hub (124, 252) rotates within the gerotor star (118) as the gerotor star (118) orbits about the central axis (104) and functions as a crank for rotating the brake hub (124, 252) about the central axis (104) as the gerotor star (118) orbits about the central axis (104).

3. The hydraulic drive device (100) of claim 2, wherein the first portion (126, 254) of the brake hub (124, 252) is rotatably mounted within an opening defined by a motor cover (142) that rotates in unison with the outer motor ring (114) and the drive housing (108).

4. The hydraulic drive device (100) of claim 3, wherein the second portion (128, 256) of the brake hub (124, 252) concentrically mounts within a central opening (144) of the gerotor star (118).

5. The hydraulic drive device (100) of claim 4, wherein the first and second portions (126, 128, 254, 256) of the brake hub (124, 252) are defined as one unitary piece.

6. The hydraulic drive device (100) of claim 4, wherein the brake hub (124) includes a multi-piece configuration.

7. The hydraulic drive device (100) of claim 6, wherein the brake hub (124) includes a main body (210) defining the first portion (126) of the brake hub (124) and an inner part (148) of the second portion (128) of the brake hub (124), wherein the second portion (128) of the brake hub (124) also includes an outer collar (212) that mounts on the inner part (148) of the second portion (128) of the brake hub (124) and includes an outer surface (214) that is concentric with the central opening (144) of the gerotor star (118), wherein the outer collar (212) is configured to rotate with the main body (210) about the central axis (104), and wherein relative rotation about the star axis (122) occurs between the outer collar (212) and the gerotor star (118) as the brake hub (124) rotates about the central axis (104) and the gerotor star (118) orbits about the central axis (104).

8. The hydraulic drive device (100) of claim 7, wherein an inner surface (218) of the outer collar (212) includes a collar flat edge (236), wherein the inner part (148) of the second portion (128) of the brake hub (124) includes a hub flat edge (238), wherein the collar flat edge (236) and the hub flat edge (238) align.

9. The hydraulic drive device (100) of claim 7, wherein an outer surface (214) of the outer collar (212) is phosphate treated.

10. The hydraulic drive device (100) of claim 7, wherein an outer surface (214) of the inner part (148) of the second portion (128) of the brake hub (124) and an inner surface (218) of the outer collar (212) oppose one another along an axial thickness (T), and wherein the outer surface (214) of the inner part (148) of the second portion (128) of the brake hub (124) and the inner surface (218) of the outer collar (212) have curvatures (220, 222) with eccentric radii configured to reduce edge loading and to focus loading at a central region of the axial thickness (T).

11. The hydraulic drive device (100) of claim 3, wherein a brake cover (156) is mounted outside the motor cover (142) and is configured to rotate in unison with the motor cover (142), the outer motor ring (114), and the drive housing (108), wherein a brake chamber (158) is defined between the motor cover (142) and the brake cover (156), wherein the brake hub (124) includes a pad mounting extension that extends into the brake chamber (158), wherein a plurality of the first brake pads (132) are mounted on the pad mounting extension within the brake chamber (158) and are configured to rotate with the brake hub (124), wherein a plurality of the second brake pads (134) are coupled to the brake cover (156) and are configured to rotate in unison with the brake cover (156), and wherein the first and second brake pads (132, 134) are interleaved.

12. The hydraulic drive device (100) of claim 11, wherein the brake cover (156), the motor cover (142), and the outer motor ring (114) are secured to the drive housing (108) by axial bolts (160).

13. The hydraulic drive device (100) of claim 1, wherein the brake release (140) includes a single rod that extends through the central shaft (130) and the brake hub (124).

14. The hydraulic drive device (100) of claim 1, wherein the pockets (116) are separated by rollers (146).

15. The hydraulic drive device (100) of claim 1, wherein the brake release (203) includes a first rod (202) that extends through the central shaft (130) and a second rod (204) that extends through the brake hub (124), wherein the first and second rods (203, 204) engage one another at engagement ends (206, 208), wherein the second rod (204) is concentric with the central axis (104) and the engagement end (206) of the first rod (202) is eccentric with respect to the central axis (104) and aligned with the gerotor star (118).

16. The hydraulic drive device (100) of claim 15, wherein the brake release (140, 203) is hydraulically actuated, wherein a thrust plate (216) is mounted to the spindle (102), wherein a brake actuation piston (152) is mounted within the thrust plate (216), wherein during brake actuation hydraulic pressure is applied to the brake actuation piston (152) such that the brake actuation piston (152) drives the brake release (140, 203) toward the brake piston (136) to move the brake piston (136) away from the first and second brake pads (132, 134) against the spring bias of the brake spring (138).

17. The hydraulic drive device (100) of claim 16, wherein the thrust plate (216) defines a stop that stops movement of the brake actuation piston (152) at a predetermined location to limit the axial range of movement of the brake release (140, 203) and to prevent the brake spring (138) from bottoming out.

18. The hydraulic drive device (100) of claim 16, further comprising a spacer (224) between the brake release (203) and the brake actuation piston (152).

19. The hydraulic drive device (100) of claim 18, further comprising shims (228) between the spacer (224) and the brake actuation piston (152).

20. The hydraulic drive device (100) of any of claims 1 - 19, wherein the first brake pad (132) includes teeth (232) which align with splines on the brake hub (252).

## Patentansprüche

1. Eine hydraulische Antriebsvorrichtung (100) mit mechanischer Bremse, wobei die hydraulische Antriebsvorrichtung (100) umfasst:
eine Spindel (102) mit einem ersten Montageflansch (106), wobei die Spindel (102) eine Mittelachse (104) definiert;
ein Antriebsgehäuse (108), das an der Spindel (102) montiert ist, wobei das Antriebsgehäuse (108) einen zweiten Montageflansch (110) aufweist;
Lager (112) zum Ermöglichen einer Rotation des Antriebsgehäuses (108) relativ zu der Spindel (102) um die Mittelachse (104);
eine Gerotor-Hydraulikmotor-Anordnung (113) mit einem äußeren Motorring (114), der mit dem Antriebsgehäuse (108) so gekoppelt ist, dass der äußere Motorring (114) und das Antriebsgehäuse (108) gemeinsam um die Mittelachse (104) rotieren können, der äußere Motorring (114) eine Vielzahl von radial nach innen weisenden Taschen (116) aufweist, die in Umfangsrichtung um die Mittelachse (104) beabstandet sind, wobei die Gerotor-Hydraulikmotor-Anordnung (113) auch einen Gerotorstern (118) mit einer Vielzahl von Nocken (120) aufweist, die in Umfangsrichtung um eine durch den Gerotorstern (118) definierte Sternachse (122) angeordnet sind, der Gerotorstern (118) innerhalb des äußeren Motorrings (114) angeordnet ist, wobei die Sternachse (122) von der Mittelachse (104) versetzt ist, so dass der Gerotorstern (118) in Bezug auf den äußeren Motorring (114) exzentrisch ist, wobei der Gerotorstern (118) so montiert ist, dass er um die Mittelachse (104) orbitiert, um die Nocken (120) in die Taschen (116) des äußeren Motorrings (114) hinein und aus ihnen heraus zu bringen, wenn der äußere Motorring (114) hydraulisch um die Mittelachse (104) angetrieben wird, wobei ein Umlauf des Gerotorsterns (118) um die Mittelachse (104) einer Bewegung des äußeren Motorrings (114) um eine Taschenposition um die Mittelachse (104) relativ zum Gerotorstern (118) entspricht;
eine mittlere Welle (130), die dazu eingerichtet ist, den Gerotorstern (118) daran zu hindern, sich um die Sternachse (122) relativ zur Spindel (102) zu rotieren, wohingegen sie dem Gerotorstern (118) erlaubt, um die zentrale Achse (104) zu orbitieren;
**gekennzeichnet durch** eine Bremsnabe (124, 252) mit einem ersten Abschnitt (126, 254), der konzentrisch zu der Mittelachse (104) ist, und einem zweiten Abschnitt (128, 256), der konzentrisch zu dem Gerotorstern (118) ist, wobei der zweite Abschnitt (128, 256) der Bremsnabe (124, 252) mechanisch mit dem Gerotorstern (118) zusammenwirkt, so dass eine Umlaufbewegung des Gerotorsterns (118) um die Mittelachse (104) eine Rotation der Bremsnabe (124, 252) um die Mittelachse (104) antreibt, wobei die Bremsnabe (124, 252) jedes Mal, wenn der Gerotorstern (118) um die Mittelachse (104) orbitiert, einmal um die Mittelachse (104) rotiert;
einen ersten Bremsbelag (132), der so montiert ist, dass er sich zusammen mit der Bremsnabe (124, 252) um die Mittelachse (104) rotiert;
einen zweiten Bremsbelag (134), der so montiert ist, dass er sich gemeinsam mit dem Antriebsgehäuse (108) und dem äußeren Motorring (114) um die Mittelachse (104) rotiert;
einen Bremskolben (136) zum axialen Zusammendrücken des ersten und des zweiten Bremsbelags (132, 134), um ein Abbremsen der Gerotor-Hydraulikmotor-Anordnung (113) zu bewirken, wobei der Bremskolben (136) durch eine Bremsfeder (138) axial in Richtung auf den ersten und den zweiten Bremsbelag (132, 134) vorgespannt ist; und
einen Bremslöser (140, 203), der sich durch die mittlere Welle (130) und die Bremsnabe (124, 252) erstreckt, wobei der Bremslöser (140, 203) zum Lösen der Bremsung der Gerotor-Hydraulikmotor-Anordnung (113) eingerichtet ist, indem er den Bremskolben (136) gegen die Federvorspannung der Bremsfeder (138) axial von den ersten und zweiten Bremsbelägen (132, 134) wegdrückt.

2. Die hydraulische Antriebsvorrichtung (100) nach Anspruch 1, wobei der zweite Abschnitt (128, 256) der Bremsnabe (124, 252) innerhalb des Gerotorsterns (118) rotiert, wenn der Gerotorstern (118) um die Mittelachse (104) orbitiert, und als eine Kurbel zum Rotieren der Bremsnabe (124, 252) um die Mittelachse (104) fungiert, wenn der Gerotorstern (118) um die Mittelachse (104) orbitiert.

3. Die hydraulische Antriebsvorrichtung (100) nach Anspruch 2, wobei der erste Abschnitt (126, 254) der Bremsnabe (124, 252) rotierbar innerhalb einer Öffnung montiert ist, die durch eine Motorabdeckung (142) definiert ist, die gemeinsam mit dem äußeren Motorring (114) und dem Antriebsgehäuse (108) rotiert.

4. Die hydraulische Antriebsvorrichtung (100) nach Anspruch 3, wobei der zweite Abschnitt (128, 256) der Bremsnabe (124, 252) konzentrisch in einer zentralen Öffnung (144) des Gerotorsterns (118) montiert ist.

5. Die hydraulische Antriebsvorrichtung (100) nach Anspruch 4, wobei der erste und der zweite Abschnitt (126, 128, 254, 256) der Bremsnabe (124, 252) als ein einstückiges Teil ausgebildet sind.

6. Die hydraulische Antriebsvorrichtung (100) nach Anspruch 4, wobei die Bremsnabe (124) eine mehrteilige Konfiguration aufweist.

7. Die hydraulische Antriebsvorrichtung (100) nach Anspruch 6, wobei die Bremsnabe (124) einen Hauptkörper (210) aufweist, der den ersten Abschnitt (126) der Bremsnabe (124) und einen inneren Teil (148) des zweiten Abschnitts (128) der Bremsnabe (124) definiert, wobei der zweite Abschnitt (128) der Bremsnabe (124) auch einen Außenkragen (212) aufweist, der an dem inneren Teil (148) des zweiten Abschnitts (128) der Bremsnabe (124) montiert ist und eine Außenfläche (214) aufweist, die konzentrisch zu der zentralen Öffnung (144) des Gerotorsterns (118) ist, wobei der Außenkragen (212) dazu eingerichtet ist, mit dem Hauptkörper (210) um die Mittelachse (104) zu rotieren, und wobei eine relative Rotation um die Sternachse (122) zwischen dem Außenkragen (212) und dem Gerotorstern (118) stattfindet, wenn die Bremsnabe (124) um die Mittelachse (104) rotiert und der Gerotorstern (118) um die Mittelachse (104) orbitiert.

8. Die hydraulische Antriebsvorrichtung (100) nach Anspruch 7, wobei eine Innenfläche (218) des Außenkragens (212) eine flache Kragenkante (236) aufweist, wobei der innere Teil (148) des zweiten Abschnitts (128) der Bremsnabe (124) eine flache Nabenkante (238) aufweist, wobei die flache Kragenkante (236) und die flache Nabenkante (238) fluchten.

9. Die hydraulische Antriebsvorrichtung (100) nach Anspruch 7, wobei eine Außenfläche (214) des Außenkragens (212) phosphatbehandelt ist.

10. Die hydraulische Antriebsvorrichtung (100) nach Anspruch 7, wobei eine Außenfläche (214) des Innenteils (148) des zweiten Abschnitts (128) der Bremsnabe (124) und eine Innenfläche (218) des Außenkragens (212) einander entlang einer axialen Dicke (T) gegenüberliegen, und wobei die Außenfläche (214) des Innenteils (148) des zweiten Abschnitts (128) der Bremsnabe (124) und die Innenfläche (218) des Außenkragens (212) Krümmungen (220, 222) mit exzentrischen Radien aufweisen, die eingerichtet sind, um Kantenbelastung zu reduzieren und Belastung in einem zentralen Bereich der axialen Dicke (T) zu konzentrieren.

11. Die hydraulische Antriebsvorrichtung (100) nach Anspruch 3, wobei eine Bremsabdeckung (156) außerhalb der Motorabdeckung (142) montiert und dazu eingerichtet ist, gemeinsam mit der Motorabdeckung (142), dem äußeren Motorring (114) und dem Antriebsgehäuse (108) zu rotieren, wobei eine Bremskammer (158) zwischen der Motorabdeckung (142) und der Bremsabdeckung (156) definiert ist, wobei die Bremsnabe (124) eine Belagbefestigungsverlängerung aufweist, die sich in die Bremskammer (158) erstreckt, wobei mehrere der ersten Bremsbeläge (132) an der Belagbefestigungsverlängerung innerhalb der Bremskammer (158) montiert und dazu eingerichtet sind, mit der Bremsnabe (124) zu rotiert, wobei mehrere der zweiten Bremsbeläge (134) mit der Bremsabdeckung (156) gekoppelt und dazu eingerichtet sind, gemeinsam mit der Bremsabdeckung (156) zu rotieren, und wobei die ersten und zweiten Bremsbeläge (132, 134) verschachtelt sind.

12. Die hydraulische Antriebsvorrichtung (100) nach Anspruch 11, wobei die Bremsabdeckung (156), die Motorabdeckung (142) und der äußere Motorring (114) durch Axialbolzen (160) an dem Antriebsgehäuse (108) befestigt sind.

13. Die hydraulische Antriebsvorrichtung (100) nach Anspruch 1, wobei der Bremslöser (140) eine einzelne Stange umfasst, die sich durch die mittlere Welle (130) und die Bremsnabe (124) erstreckt.

14. Die hydraulische Antriebsvorrichtung (100) nach Anspruch 1, wobei die Taschen (116) durch Rollen (146) getrennt sind.

15. Die hydraulische Antriebsvorrichtung (100) nach Anspruch 1, wobei der Bremslöser (203) eine erste Stange (202) umfasst, die sich durch die mittlere Welle (130) erstreckt, und eine zweite Stange (204), die sich durch die Bremsnabe (124) erstreckt, wobei die erste und die zweite Stange (203, 204) an Eingriffsenden (206, 208) ineinander eingreifen, wobei die zweite Stange (204) konzentrisch mit der Mittelachse (104) ist und das Eingriffsende (206) der ersten Stange (202) exzentrisch in Bezug auf die Mittelachse (104) ist und mit dem Gerotorstern (118) ausgerichtet ist.

16. Die hydraulische Antriebsvorrichtung (100) nach Anspruch 15, wobei der Bremslöser (140, 203) hydraulisch betätigt wird, wobei eine Druckplatte (216) an der Spindel (102) montiert ist, wobei ein Bremsbetätigungskolben (152) innerhalb der Druckplatte (216) montiert ist, wobei während der Bremsbetätigung hydraulischer Druck auf den Bremsbetätigungskolben (152) ausgeübt wird, so dass der Bremsbetätigungskolben (152) den Bremslöser (140, 203) zum Bremskolben (136) hin treibt, um den Bremskolben (136) gegen die Federvorspannung der Bremsfeder (138) von den ersten und zweiten Bremsbelägen (132, 134) weg zu bewegen.

17. Die hydraulische Antriebsvorrichtung (100) nach Anspruch 16, wobei die Druckplatte (216) einen Anschlag definiert, der die Bewegung des Bremsbetätigungskolbens (152) an einer vorbestimmten Stelle stoppt, um den axialen Bewegungsbereich des Bremslösers (140, 203) zu begrenzen und um die Bremsfeder (138) daran zu hindern, durchzuschlagen.

18. Die hydraulische Antriebsvorrichtung (100) nach Anspruch 16, ferner umfassend einen Abstandshalter (224) zwischen dem Bremslöser (203) und dem Bremsbetätigungskolben (152).

19. Die hydraulische Antriebsvorrichtung (100) nach Anspruch 18, ferner umfassend Unterlegscheiben (228) zwischen dem Abstandhalter (224) und dem Bremsbetätigungskolben (152).

20. Die hydraulische Antriebsvorrichtung (100) nach einem der Ansprüche 1 bis 19, wobei der erste Bremsbelag (132) Zähne (232) aufweist, die mit Keilnuten an der Bremsnabe (252) ausgerichtet sind.

## Revendications

1. Dispositif d'entraînement hydraulique (100) avec freinage mécanique, le dispositif d'entraînement hydraulique (100) comprenant :
une broche (102) ayant une première bride de montage (106), la broche (102) définissant un axe central (104) ;
un boîtier d'entraînement (108) monté sur la broche (102), le boîtier d'entraînement (108) comprenant une seconde bride de montage (110) ;
des roulements (112) pour permettre au boîtier d'entraînement (108) de tourner par rapport à la broche (102) autour de l'axe central (104) ;
un agencement de moteur hydraulique à gérotor (113) comprenant une bague de moteur extérieure (114) couplée au boîtier d'entraînement (108) de sorte que la bague de moteur extérieure (114) et le boîtier d'entraînement (108) sont adaptés pour tourner à l'unisson autour de l'axe central (104), la bague de moteur extérieure (114) comprenant une pluralité de poches (116) orientées radialement vers l'intérieur espacées circonférentiellement autour de l'axe central (104), l'agencement de moteur hydraulique à gérotor (113) comprenant également une étoile de gérotor (118) comprenant une pluralité de lobes (120) positionnés circonférentiellement autour d'un axe d'étoile (122) défini par l'étoile de gérotor (118), l'étoile de gérotor (118) étant positionnée à l'intérieur de la bague de moteur extérieure (114) avec l'axe d'étoile (122) décalé par rapport à l'axe central (104) de sorte que l'étoile de gérotor (118) est excentrique par rapport à la bague de moteur extérieure (114), l'étoile de gérotor (118) étant montée pour orbiter autour de l'axe central (104) afin d'amener les lobes (120) à entrer et à sortir des poches (116) de la bague de moteur extérieure (114) lorsque la bague de moteur extérieure (114) est entraînée hydrauliquement autour de l'axe central (104), où une orbite de l'étoile de gérotor (118) autour de l'axe central (104) correspond à la bague de moteur extérieure (114) se déplaçant d'une position de poche autour de l'axe central (104) par rapport à l'étoile de gérotor (118) ;
un arbre central (130) configuré pour empêcher l'étoile de gérotor (118) de tourner autour de l'axe d'étoile (122) par rapport à la broche (102) tout en permettant à l'étoile de gérotor (118) d'orbiter autour de l'axe central (104) ;
**caractérisé par** un moyeu de frein (124, 252) comprenant une première partie (126, 254) concentrique avec l'axe central (104), et une seconde partie (128, 256) qui est concentrique avec l'étoile de gérotor (118), la seconde partie (128, 256) du moyeu de frein (124, 252) s'interfaçant mécaniquement avec l'étoile de gérotor (118) de sorte que le mouvement orbital de l'étoile de gérotor (118) autour de l'axe central (104) entraîne la rotation du moyeu de frein (124, 252) autour de l'axe central (104), où le moyeu de frein (124, 252) tourne une fois autour de l'axe central (104) chaque fois que l'étoile de gérotor (118) orbite autour de l'axe central (104) ;
une première plaquette de frein (132) montée pour tourner à l'unisson avec le moyeu de frein (124, 252) autour de l'axe central (104) ;
une seconde plaquette de frein (134) montée pour tourner à l'unisson avec le boîtier d'entraînement (108) et la bague de moteur extérieure (114) autour de l'axe central (104) ;
un piston de frein (136) pour presser la première et la seconde plaquettes de frein (132, 134) axialement ensemble afin de fournir un freinage de l'agencement de moteur hydraulique à gérotor (113), le piston de frein (136) étant sollicité par ressort axialement vers la première et la seconde plaquettes de frein (132, 134) par un ressort de frein (138) ; et
un dispositif de desserrage de frein (140, 203) qui s'étend à travers l'arbre central (130) et le moyeu de frein (124, 252), le dispositif de desserrage de frein (140, 203) étant adapté à desserrer le freinage de l'agencement de moteur hydraulique à gérotor (113) en poussant le piston de frein (136) axialement à l'écart des première et seconde plaquettes de frein (132, 134) à l'encontre de la sollicitation par ressort du ressort de frein (138).

2. Dispositif d'entraînement hydraulique (100) de la revendication 1, dans lequel la seconde partie (128, 256) du moyeu de frein (124, 252) tourne à l'intérieur de l'étoile de gérotor (118) lorsque l'étoile de gérotor (118) orbite autour de l'axe central (104) et fonctionne comme une manivelle pour faire tourner le moyeu de frein (124, 252) autour de l'axe central (104) lorsque l'étoile de gérotor (118) orbite autour de l'axe central (104).

3. Dispositif d'entraînement hydraulique (100) de la revendication 2, dans lequel la première partie (126, 254) du moyeu de frein (124, 252) est montée de manière rotative à l'intérieur d'une ouverture définie par un couvercle de moteur (142) qui tourne à l'unisson avec la bague de moteur extérieure (114) et le boîtier d'entraînement (108).

4. Dispositif d'entraînement hydraulique (100) de la revendication 3, dans lequel la seconde partie (128, 256) du moyeu de frein (124, 252) se monte concentriquement à l'intérieur d'une ouverture centrale (144) de l'étoile de gérotor (118).

5. Dispositif d'entraînement hydraulique (100) de la revendication 4, dans lequel la première et la seconde parties (126, 128, 254, 256) du moyeu de frein (124, 252) sont définies comme une pièce unitaire.

6. Dispositif d'entraînement hydraulique (100) de la revendication 4, dans lequel le moyeu de frein (124) comprend une configuration en plusieurs pièces.

7. Dispositif d'entraînement hydraulique (100) de la revendication 6, dans lequel le moyeu de frein (124) comprend un corps principal (210) définissant la première partie (126) du moyeu de frein (124) et une partie intérieure (148) de la seconde partie (128) du moyeu de frein (124), où la seconde partie (128) du moyeu de frein (124) comprend également un collier extérieur (212) qui se monte sur la partie intérieure (148) de la seconde partie (128) du moyeu de frein (124) et comprend une surface extérieure (214) qui est concentrique avec l'ouverture centrale (144) de l'étoile de gérotor (118), où le collier extérieur (212) est configuré pour tourner avec le corps principal (210) autour de l'axe central (104), et où une rotation relative autour de l'axe d'étoile (122) se produit entre le collier extérieur (212) et l'étoile de gérotor (118) lorsque le moyeu de frein (124) tourne autour de l'axe central (104) et que l'étoile de gérotor (118) orbite autour de l'axe central (104).

8. Dispositif d'entraînement hydraulique (100) de la revendication 7, dans lequel une surface intérieure (218) du collier extérieur (212) comprend un bord plat de collier (236), où la partie intérieure (148) de la seconde partie (128) du moyeu de frein (124) comprend un bord plat de moyeu (238), où le bord plat de collier (236) et le bord plat de moyeu (238) s'alignent.

9. Dispositif d'entraînement hydraulique (100) de la revendication 7, dans lequel une surface extérieure (214) du collier extérieur (212) est traitée au phosphate.

10. Dispositif d'entraînement hydraulique (100) de la revendication 7, dans lequel une surface extérieure (214) de la partie intérieure (148) de la seconde partie (128) du moyeu de frein (124) et une surface intérieure (218) du collier extérieur (212) s'opposent l'une à l'autre le long d'une épaisseur axiale (T), et où la surface extérieure (214) de la partie intérieure (148) de la seconde partie (128) du moyeu de frein (124) et la surface intérieure (218) du collier extérieur (212) présentent des courbures (220, 222) avec des rayons excentriques configurés pour réduire la charge de bord et pour concentrer la charge dans une région centrale de l'épaisseur axiale (T).

11. Dispositif d'entraînement hydraulique (100) de la revendication 3, dans lequel un couvercle de frein (156) est monté à l'extérieur du couvercle de moteur (142) et est configuré pour tourner à l'unisson avec le couvercle de moteur (142), la bague de moteur extérieure (114) et le boîtier d'entraînement (108), où une chambre de frein (158) est définie entre le couvercle de moteur (142) et le couvercle de frein (156), où le moyeu de frein (124) comprend une extension de montage de plaquettes qui s'étend dans la chambre de frein (158), où une pluralité des premières plaquettes de frein (132) sont montées sur l'extension de montage de plaquettes à l'intérieur de la chambre de frein (158) et sont configurées pour tourner avec le moyeu de frein (124), où une pluralité des secondes plaquettes de frein (134) sont couplées au couvercle de frein (156) et sont configurées pour tourner à l'unisson avec le couvercle de frein (156), et où les premières et secondes plaquettes de frein (132, 134) sont entrelacées.

12. Dispositif d'entraînement hydraulique (100) de la revendication 11, dans lequel le couvercle de frein (156), le couvercle de moteur (142) et la bague de moteur extérieure (114) sont fixés au boîtier d'entraînement (108) par des boulons axiaux (160).

13. Dispositif d'entraînement hydraulique (100) de la revendication 1, dans lequel le dispositif de desserrage de frein (140) comprend une tige unique qui s'étend à travers l'arbre central (130) et le moyeu de frein (124).

14. Dispositif d'entraînement hydraulique (100) de la revendication 1, dans lequel les poches (116) sont séparées par des rouleaux (146).

15. Dispositif d'entraînement hydraulique (100) de la revendication 1, dans lequel le dispositif de desserrage de frein (203) comprend une première tige (202) qui s'étend à travers l'arbre central (130) et une seconde tige (204) qui s'étend à travers le moyeu de frein (124), où la première et la seconde tiges (203, 204) engagent l'autre au niveau d'extrémités d'engagement (206, 208), où la seconde tige (204) est concentrique avec l'axe central (104) et l'extrémité d'engagement (206) de la première tige (202) est excentrique par rapport à l'axe central (104) et alignée avec l'étoile de gérotor (118).

16. Dispositif d'entraînement hydraulique (100) de la revendication 15, dans lequel le dispositif de desserrage de frein (140, 203) est actionné hydrauliquement, où une plaque de poussée (216) est montée sur la broche (102), où un piston d'actionnement de frein (152) est monté à l'intérieur de la plaque de poussée (216), où, pendant l'actionnement du frein, une pression hydraulique est appliquée au piston d'actionnement de frein (152) de sorte que le piston d'actionnement de frein (152) entraîne le dispositif de desserrage de frein (140, 203) vers le piston de frein (136) pour éloigner le piston de frein (136) de la première et la seconde plaquettes de frein (132, 134) à l'encontre de la sollicitation par ressort du ressort de frein (138).

17. Dispositif d'entraînement hydraulique (100) de la revendication 16, dans lequel la plaque de poussée (216) définit une butée qui arrête le mouvement du piston d'actionnement de frein (152) à un emplacement prédéterminé pour limiter la plage axiale de mouvement du dispositif de desserrage de frein (140, 203) et pour empêcher le ressort de frein (138) de s'affaisser.

18. Dispositif d'entraînement hydraulique (100) de la revendication 16, comprenant en outre une entretoise (224) entre le dispositif de desserrage de frein (203) et le piston d'actionnement de frein (152).

19. Dispositif d'entraînement hydraulique (100) de la revendication 18, comprenant en outre des cales (228) entre l'entretoise (224) et le piston d'actionnement de frein (152).

20. Dispositif d'entraînement hydraulique (100) de l'une quelconque des revendications 1 à 19, dans lequel la première plaquette de frein (132) comprend des dents (232) qui s'alignent avec des cannelures sur le moyeu de frein (252).
